# EUROPÄISCHE PATENTANMELDUNG

(11) **EP 0 866 039 A1**
(43) Veröffentlichungstag der Anmeldung: **23.09.1998**
(21) Anmeldenummer: 98104842.4
(22) Anmeldetag: 17.03.1998
(51) Int. Cl.: C04B 28/34

(54) **Verfahren zum Herstellen eines Isolationsschaums und danach hergestellter Isolationsschaum**

(30) Priorität: 20.03.1997 DE 19711633
(71) Anmelder: Räsontec N.V., Curaçao (AN)
(72) Erfinder: Moraitis, Christina, 97877 Wertheim/Main (DE)
(74) Vertreter: Stocker, Kurt

(57) **Zusammenfassung**

Bei einem Verfahren zum Herstellen eines Isolationsschaums mit einer Flugasche enthaltenden Matrix, einem Bindemittel, einem Härter und einem Schäummittel wird für das Bindemittel für die Matrix mindestens ein sauer reagierendes Bindemittel verwendet, so daß das Bindemittel für die Matrix im Isolierschaum mindestens eine sauer reagierende Komponente enthält. Alternativ oder zusätzlich wird zum Schäummittel auch noch ein Reaktionsbeschleuniger zugegeben.

## Beschreibung

Die Erfindung bezieht sich auf ein Verfahren nach dem Oberbegriff des Anspruches 1 bzw. 3 sowie auf eine Isolationsschaummasse mit den Oberbegriffsmerkmalen der Ansprüche 5 und 7.

Aschen, und insbesondere Flugasche, sind eine oft in relativ großen Mengen anfallende, problematische Substanz. Die Entsorgung erfolgt im allgemeinen auf Deponien, auf die besonders Flugasche nur schwer, meist in einer Mischung mit Wasser, zu transportieren ist. Zusätzlich wird die Deponierung, mangels einer entsprechend großen Anzahl an zur Verfügung stehenden Deponien, immer teurer.

Es wurde daher seit langem nach einer Anwendung von Aschen, und insbesondere von Flugasche, als Ausgangsmaterial für ein vermarktbares Produkt gesucht. Die DE-A-40 40 180 gibt eine Rezeptur mit den Oberbegriffsmerkmalen der Ansprüche 1, 3, 5 und 7 an, wobei Flugasche für die Herstellung eines feinporigen Schaumes eingesetzt werden soll. Der entstehende Schaum wird als wärmedämmend beschrieben und für den Einsatz als Brandschutzmaterial vorgeschlagen. Dieser letztere Zweck ergibt sich besonders durch wärmeverzehrende Eigenschaften dieser Substanz. Es ist aber klar, daß mit einem solchen Schaum auch eine gewisse Kälte- und Schallisolation verbunden ist.

Zwar werden in dieser Schrift die Reaktionen der verschiedenen Komponenten erwähnt, in der Praxis aber wurde gefunden, daß das Endprodukt nicht ganz den Anforderungen entspricht, und daß überdies die erwünschten Reaktionen nur schlecht oder unvollkommen von statten gehen. Insbesondere härtete das, in der einschlägigen Technik in weitem Maße verwendete Wasserglas sowie das Schäummittel überraschend schlecht aus, was die Reaktion verlangsamte und überdies zu einem Produkt führte, das über lange Zeit nicht die in der genannten DE-A- erwähnten Festigkeitswerte aufwies.

Der vorliegenden Erfindung liegt daher die Aufgabe zugrunde, einen Weg aufzuzeigen, wie ein Isolationsschaum nach einem der eingangs genannten Verfahren so hergestellt werden kann, daß sich ein zufriedenstellende Produkt ergibt und daß die Reaktionen in einer für die Praxis brauchbaren, effizienten Weise ablaufen. Erfindungsgemäß wird diese Aufgabe durch die kennzeichnenden Merkmale der Ansprüche 1, 3, 5 und 7 gelöst.

Ausgangspunkt für diese Lösung waren umfangreiche Untersuchungen der Anmelderin hinsichtlich des tatsächlich ablaufenden Reaktionsmechanismus. Es stellte sich die Erkenntnis heraus, daß Aschen, und besonders Flugasche, zwar den Vorteil haben, ein billiger und gerne zur Herstellung eines marktfähigen Produktes eingesetztes Rohmaterial zu sein, daß sie aber gewisse Eigenheiten besitzen, die den Einsatz herkömmlicher Mittel verbietet.

Vor allem wird durch die erfindungsgemäße Verwendung eines sauer reagierenden Bindemittels bzw. einer solchen Bindemittelkomponente eine bessere Verbindung mit der Asche, wie Flugasche oder auch Reisschalenasche, erreicht. Flugasche reagiert an sich basisch und geht daher mit dem im Stande der Technik vorgeschlagenen Wasserglas nur schlecht eine Verbindung ein. Durch die erfindungsgemäße Verwendung eines sauer reagierenden Bindemittels bzw. einer solchen Bindemittelkomponente wird vor allem eine anorganisch-chemische Bindung der Schaumbestandteile geschaffen, die im allgemeinen vom Raum- bzw. Niedrigtemperaturbereich bis zunächst zu so hohen Temperaturen wie 1000°C bis 1500°C reicht, womit sich dann ein lückenloser Übergang zu einer keramischen Bindung ergibt und es nicht zur Bildung eines ausgeprägten Bereiches verminderter Festigkeit kommt.

Dabei könnte auch ein geringer Zusatz an Wasserglas erfolgen, denn in Gegenwart einer sauer reagierenden Komponente bildet sich reaktionsfähige Kieselsäure, die bei der Kondensation zu Polykieselsäuren eine verfestigende Wirkung ergeben können. Ein solcher Zusatz ist jedoch insbesondere für den bereits im Stande der Technik vorgeschlagenen Einsatz als Brandschutzmaterial nicht bevorzugt, weil dabei der Schaum oft in geschlossene Räume, z.B. Zwischenräume zwischen zwei Deckplatten, d.h. praktisch unter Luftabschluß, eingefüllt wird, und damit das Wasserglas, welches den Zutritt von CO₂ aus der Luft zur Aushärtung benötigt, nur unter Festigkeitsverlust des Isolierschaumes verwendet werden kann. Auch hat sich gezeigt, daß der hohe Alkalianteil von Wasserglas gerade dem gedachten Zweck als Brandschutzmaterial entgegensteht, weil es die Feuerbeständigkeit negativ beeinflußt.

Auch im Falle des Schäummittels ergaben die durchgeführten Untersuchungen, daß eine bessere Verfestigung als beim Stande der Technik durch die Maßnahmen des Anspruches 3 zum Erhalt eines Isolationsschaumes nach Anspruch 7 erreicht wird. Damit ergeben sich zusätzlich die Vorteile einer höheren Porosität bei besonders homogenem Gefüge hinsichtlich der Porenvolumenstruktur. Als heterogene Katalysatoren kommen feinverteiltes Silber, Gold oder Platin in Betracht, also Materialien, die verhältnismäßig teuer sind. Deshalb ist die Auswahl nach Anspruch 4 bevorzugt. Andere heterogene Katalysatoren umfassen Kupferverbindungen, wie Kupfer(II)-Sulfat oder Kupfer(II)-Oxyd.

Andere, homogene Katalysatoren umfassen Nichtmetallionen, wie I⁻, IO₃⁻ oder OH⁻ sowie Metallionen, wie Fe³⁺ oder Cu²⁺. Mit all diesen Katalysatoren läßt sich das Schäumen, insbesondere bei Verwendung von H₂O₂ als Schäummittel, stark beschleunigen und verbessern, so daß bereits bei Raumtemperatur eine starke Gasentwicklung eintritt.

Obwohl eine ganze Anzahl von erfindungsgemäß zu verwendenden sauren Bindemitteln in Frage kommen, wie Sorel-Zement (mit Magnesiumverbindungen, wie Magnesia, Magnesiumchlorid und - sulfat) oder Äthylsilikat, ist die Durchführung des Verfahrens im Sinne des Anspruches 2 bevorzugt, da so in der Praxis die besten Ergebnisse erzielt wurden. Es hat sich nämlich gezeigt, daß damit im Raum- und Niedrigtemperaturbereich eine Reaktion sowohl mit oxydischen als auch mit basischen Rohstoffen in Form einer Neutralisationsreaktion stattfindet, die zu besonders festen Endprodukten führt. Beim Erhitzen auf Temperaturen oberhalb 200°C tritt sogar noch eine zusätzliche Bindung durch Bildung polymerer Phosphate ein, die bei weiterer Temperatursteigerung bis zum Einsetzen einer keramischen Bindung bestehen bleibt, womit sich der erhaltene Isolationsschaum besonders als Brandschutzmittel empfiehlt. Mit Hilfe der Phosphatbindung können praktisch alle feuerfesten Zuschlagstoffe schon in der Kälte oder bei mäßigen Temperaturen binden, und es treten, wie bereits oben darauf hingewiesen wurde, keine "schwachen Temperaturbereiche" auf, so daß die hohe Feuerfestigkeit bzw. -beständigkeit der Matrix- bzw. Zuschlagstoffe praktisch vollständig ausgenutzt werden kann. Dabei kommt es in allen Fällen zu einer Reaktion der sauren Phosphorsäureverbindung, wie Monoaluminiumphosphat (MPA), mit den basischen oder amphoteren Oxyden der Matrixkomponenten.

Besondere Vorteile phosphatgebundener Werkstoffe liegen in den hohen Festigkeiten im gebrannten und ungebrannten Zustand, einer geringen Schwindung beim Erhitzen und eine gute Beständigkeit gegen Temperaturwechsel. Nötigenfalls kann die Abbindung auch durch die Zugabe von Wasserglas ebenso verzögert werden, wie durch die Zugabe von Sulfosalicylsäure, Acetylaceton und/ oder Natriumtetraborat (Borax).

Eine Besonderheit, und obwohl im Zusammenhang mit der oben beschriebenen Erfindung von besonderem Vorteil, so doch von eigener erfinderischer Bedeutung, ist die Verwendung eines Härters nach Anspruch 9. Bei beiden Materialien handelt es sich eigentlich um Abbinderegler, die das Abbindeverhalten des Bindemittels beeinflussen. So kann also der Ablauf der Reaktion entsprechend den Anforderungen eingestellt werden. Dabei sei erwähnt, daß sowohl Magnesiumoxyd alsauch der Tonerdeschmelzzement für sich als Härter eingesetzt werden könnten, daß aber die Zugabe von MPA erst zu einem besonders sparsamen Verbrauch bei guten Raumtemperaturfestigkeiten führt. In dieser Kombination wirken die beiden erstgenannten Substanzen eher als Abbinderegler, wobei ihre Menge die Aushärtezeit und die Endfestigkeit des Produktes bestimmt. Bevorzugte Mengen sind unten in den Beispielen angegeben.

Besonders bei Verwendung als Brandschutzschaum ist die Ausbildung nach Anspruch 10 besonders wertvoll. Es wurde gefunden, daß gerade Aluminiumhydroxyd bzw. Aluminiumoxyhydrat deswegen vorteilhaft sind, weil es Kristallwasser enthält, das bei Temperatureinwirkung endotherm ausgetrieben wird, was sich daher günstig auf die wärmeverzehrenden Eigenschaften und damit auf die Feuerbeständigkeit auswirkt. Auch bei dieser Maßnahme handelt es sich somit um eine solche von eigener erfinderischer Bedeutung, obwohl sich synergetische Wirkungen gerade im Zusammenhang mit den in den Hauptansprüchen erwähnten Merkmalen ergeben, denn Aluminiumhydroxyd beschleunigt den Abbindeprozeß bei Verwendung saurer Bindemittel und erhöhte die Festigkeit des Endproduktes. Andere Aluminiumverbindungen können aber auch in bekannter Weise in Form von Aluminiumoxyd oder -silikat eingesetzt werden.

Dies schließt jedoch nicht aus, daß auch andere Komponenten aus dem genannten Stande der Technik, auf den hier ausdrücklich verwiesen wird, dem Isolationsschaum zugegeben werden, wie etwa Talk.

Die Erfindung soll nachstehend an Hand von Ausführungsbeispielen erläutert werden, bei denen vor dem Schäumen als Komponente des Bindemittels jeweils 15-40 Massenprozent MPA in Form einer 50%igen Losung zugesetzt und verknetet wurden. Mehrere der unten angeführten Beispiele wurden überdies unter Zugabe von 0,1 bis 2 Vol.% eines Katalysators, wie Eisensulfat, Kupfersulfat oder Braunstein wiederholt, wobei sich die jeweils gewünschte Reaktionsbeschleunigung zeigte.

### Beispiel 1:

35 g sehr feinpulvriger Elektrofilterasche (3-5 µm), und 17 g hochfeines Aluminiumhydroxyd (Korngröße etwa 2µm) als Bestandteile einer Matrix, ferner 1,5 g MgO-Pulver als Abbindebeschleuniger bzw. Härter für das saure Phosphat und 0,5 g Fe₂O₃-Pulver wurden vermischt und nacheinander unter Rühren 3 g einer 35%igen Lösung von H₂O₂ und 43 g einer 50%igen Lösung von H₂O₂ als Schäummittel hinzudosiert.

Die erhaltene Masse schäumte unter Volumenverdoppelung und Wärmeentwicklung innerhalb von etwa 5 min. auf und verfestigte sich dann, um nach ungefähr 20 Minuten die Endfestigkeit zu erhalten. Der so erhaltene Isolationsschaum wies eine sehr feine, geschlossenzellige Porenstruktur auf.

### Beispiel 2:

Die in Beispiel 1 beschriebene Mischung wurde dahingehend variiert, daß das MgO-Pulver in einem Falle ganz, in anderen Fällen teilweise ersetzt wurde. Es fand eine Volumenverdreifachung bei gegenüber Beispiel 1 geringerer Wärmeentwicklung und geringfügig erhöhten Endfestigkeiten statt, die jedoch je nach dem Massenverhältnis von MgO zu Talk erst nach etwa 60 bis 90 Minuten erreicht wurden. Somit läßt sich die Abbindegeschwindigkeit und die erreichte Festigkeit innerhalb gewisser Grenzen durch die Einstellung des Massenverhältnisses von MgO und Talk steuern.

### Beispiel 3:

Die beiden Mischungen nach Beispiel 1 und 2 wurden dahingehend variiert, daß ein grobkörnigeres Aluminiumhydroxyd-Pulver (Korngrößen zwischen 10 und 40 µm) verwendet wurde. In diesen Fällen wurde die Endfestigkeit bei gegenüber den vorigen Beispielen grobkörnigerem Gefüge nach 45 Minuten (ohne Talk) erreicht. Dieses Beispiel zeigt, daß sich über die Körnungsparameter der Matrixkomponenten die Porenstruktur innerhalb gewisser Grenzen steuern läßt.

### Beispiel 4:

Zur Unterstützung des in den obigen Beispielen jeweils zugegebenen MAP-Binders wurden geringere Anteile eines organischen Klebemittels zugegeben, um so eine zusätzliche organische Bindung zu erzeugen. Zu diesem Zwecke wurden die Beispiel 1 und 2 wiederholt, jedoch jeweils 0,5 g eines filmbildenden Mischpolymerisats auf der Basis von verschiedenen organischen Verbindungen, nämlich Polycarbonsäuren, Polyvinylalkoholen und Zellulosederivaten, hinzugefügt. Die Ergebnisse waren mit denen der Beispiele 1 und 2 vergleichbar, der erhaltene Isolationsschaum verhielt sich jedoch weniger spröde als der Beispiele 1 und 2.

### Beispiel 5:

Die Beispiele 1 und 2 wurden wiederholt, jedoch das Schäummittel weggelassen. Es ergab sich eine mineralische Dichtmasse, die anschließend den Bedingungen eines Brandes ausgesetzt wurde. Bei Temperaturen zwischen 90°C und 200°C ergab sich - bedingt durch Viskositätsabnahme und Austreiben von Wasserdampf als schäumendes Treibmittel - ein Aufschäumen unter Volumenverdoppelung. Bei 250% härtete der Schaum schlagartig vollständig aus und besaß die Festigkeit einer feuerfesten Keramik. Ein Abbinden der am Verwendungort eingebrachten zähen Dichtmasse konnte erfolgte eines der oben genannten Abbindebeschleunigers und dessen Mengenanteil innerhalb weniger Minuten bis zu wenigen Stunden, ist also in einem weiten Bereich den Erfordernissen anpaßbar.

### Beispiel 6:

40 g sehr feinpulverige Elektrofilterasche und 20 g hochfeines Aluminiumhydroxyd, beide mit Korngrößen um 2µm, wurden als Matrix mit 5 g MgO-Pulver durch Rühren vorhomogenisiert und anschließend mit 35 g der 50%igen MAP-Lösung verknetet, bis eine zähe Masse vorlag. Die Eigenschaften der damit wie in Beispiel 5 hergestellten Masse waren denen des Beispiels 5 vergleichbar.

### Beispiel 7:

Beispiel 6 wurde mehrfach wiederholt, doch wurden variierende Mengen von Aluminiumhydroxyd als Ersatz für die entsprechend reduzierte Menge an Elektrofilterasche zugefügt. Es zeigte sich, daß sich die Viskosität der erhaltenen Masse je nach dem Anteil an hinzugefügtem Aluminiumhydroxyd mit höheren Anteilen desselben absenkte, was die Verarbeitbarkeit verbesserte.

Zusammenfassend lassen sich die durch einen erfindungsgemäßen Isolationsschaum erzielbaren Vorteile, wie folgt, auflisten:
- Unbrennbarkeit und hohe Feuerbeständigkeit, ja Feuerfestigkeit (auf Grund der sich bei hohen Temperaturen ausbildenden keramischen Bindung)
- gute Kälteisolation,
- gute Schallisolation,
- gute Wäremisolationseigenschaften, und zwar passiv durch die feine Porenstruktur und die dadurch bewirkten Isolationseigenschaften und aktiv durch hohen Kristallwassergehalt und Komponenten mit hoher positiver Reaktionsenthalpie, was einen hohen Wärmeverzehr bewirkt,
- gute maschinelle Verarbeitbarkeit, bei schneller, und gegebenenfalls einstellbarer, Aushärtung,
- hohe mechanische Festigkeit bei geringem Raumgewicht,
- gute Haftung auf Stahlblech und verzinktem Blech, ohne dieses Blech zu korrodieren,
- Wasserunlöslichkeit,
- Möglichkeit, Flugasche in ein vermarktbares Produkt umzuwandeln,
- gute Umweltverträglichkeit, denn der Schaum selbst, seine Ausgangsstoffe und die im Falle eines Brandes entstehenden Reaktionsprodukte sind ungiftig,
- unkritische Entsorgung ausgebrannten Schaumes,
- gute und Verfügbarkeit der Roh- und Grundstoffe, und
- niedriger Rohstoffpreis.

## Patentansprüche

1. Verfahren zum Herstellen einer Isolationsschaummasse mit einer eine Asche enthaltenden Matrix, einem Bindemittel und einem Härter, **dadurch gekennzeichnet,** daß für das Bindemittel für die Matrix mindestens ein sauer reagierendes Bindemittel verwendet wird.

2. Verfahren nach Anspruch 1, dadurch gekennzeichnet, daß eine sauer reagierende Phosphoräureverbindung, vorzugsweise ein Aluminiumphosphat, insbesondere Monoaluminiumphosphat (MPA), gegebenenfalls unter Zusatz eines Abbindebeschleunigers, wie
- Ammoniumfluorid, z.B. in einem Anteil von 0,1 bis 0,7 Massen-%, vorzugsweise 0,2-0,5%, bezogen auf die Trockenmasse,
- kaustischem Magnesit (MgO), z.B. in einem Anteil von 0,3 bis 2,0 Massen-%, vorzugsweise 0,5-1,5%,
- Tonerdehydrat [Al(OH)₃], z.B. in einem Anteil von 1 bis 15 Massen-%, vorzugsweise 2-10%, und/oder
- Talk, z.B. in einem Anteil von 1 bis 15 Massen-%, vorzugsweise 2-10%,
verwendet wird.

3. Verfahren zum Herstellen eines isolationsschaums mit einer eine Asche enthaltenden Matrix, einem Bindemittel, einem Harter und einem Schaummittel, insbesondere nach Anspruch 1 oder 2, **dadurch gekennzeichnet,** daß zum Schäummittel auch noch ein Reaktionsbeschleuniger, z.B. in einer Menge von 0,1 bis 2 Masse-%, zugegeben wird.

4. Verfahren nach Anspruch 3, dadurch gekennzeichnet, daß als Reaktionsbeschleuniger eine Metallverbindung der Gruppe VII oder VIII des Periodischen Systems, insbesondere ein Metalloxyd, wie Eisenoxyd oder Braunstein, und/oder eine andere Eisenverbindung, wie Eisen(III)-Sulfat, z.B. mit einem kleineren Korndurchmesser als 15µm, vorzugsweise kleiner als 10µm, insbesondere von 3-5µm, zugegeben wird.

5. Isolationsschaum mit einer eine Asche enthaltenden Matrix, einem Bindemittel, einem Härter und einem Schäummittel, welches nach einem Verfahren nach Anspruch 1 oder 2 hergestellt ist, **dadurch gekennzeichnet,** daß das Bindemittel für die Matrix mindestens eine sauer reagierende Komponente enthält.

6. Isolationsschaum nach Anspruch 5, dadurch gekennzeichnet, daß das Bindemittel eine sauer reagierende Phosphorverbindung, vorzugsweise ein Aluminiumphosphat, insbesondere Monoaluminiumphosphat (MPA), enthält.

7. Isolationsschaum mit einer eine Asche enthaltenden Matrix, einem Bindemittel, einem Härter und einem Schäummittel, welches nach einem Verfahren nach einem der Ansprüche 3 bis 5 hergestellt ist, **dadurch gekennzeichnet,** daß das Schäummittel auch noch einen Reaktionsbeschleuniger enthält.

8. Isolationsschaum nach Anspruch 7, dadurch gekennzeichnet, daß das Schäummittel eine Metallverbindung der Gruppe VII oder VIII des Periodischen Systems, insbesondere ein Metalloxyd, wie Eisenoxyd oder Braunstein, enthält.

9. Isolationsschaum nach einem der vorhergehenden Ansprüche, dadurch gekennzeichnet, daß er als Härter Magnesiumoxyd und/oder Tonerdeschmelzzement, gegebenenfalls mit MPA, enthält.

10. Isolationsschaum nach einem der vorhergehenden Ansprüche, dadurch gekennzeichnet, daß die Matrix eine Aluminiumverbindung, insbesondere Aluminiumhydroxyd bzw. Aluminiumoxyhydrat, und/oder Flugasche enthält.
